# FASCICULE DE BREVET EUROPEEN

(11) **EP 3 914 829 B1**
(45) Date de publication et mention de la délivrance du brevet: **04.10.2023**
(21) Numéro de dépôt: 20705435.4
(22) Date de dépôt: 23.01.2020
(51) Int. Cl.: F04D 27/00, F04D 29/54, F04D 29/56, F01D 21/00, F02C 9/20, F01D 17/16, F01D 17/26, F02C 7/22, F02C 9/54

(54) **PROCÉDÉ DE SURVEILLANCE DE L'ÉTAT DE FONCTIONNEMENT D'UN SYSTÈME DE POSITIONNEMENT D'ORGANES À GÉOMÉTRIE VARIABLE D'UNE TURBOMACHINE**
VERFAHREN ZUR ÜBERWACHUNG DES BETRIEBSZUSTANDS EINER VERSTELLVORRICHTUNG FÜR ELEMENTE MIT VARIABLER GEOMETRIE EINER TURBOMASCHINE
METHOD FOR MONITORING THE OPERATING STATE OF A VARIABLE GEOMETRY UNITS POSITIONING SYSTEM OF A TURBOMACHINE

(30) Priorité: 24.01.2019 FR 1900627
(43) Date de publication de la demande: 01.12.2021
(73) Titulaire: Safran Helicopter Engines, 64510 Bordes (FR)
(72) Inventeur: GALLOT, Matthieu Julien, 77550 Moissy-Cramayel (FR); BENEZECH, Philippe Jean René Marie, 77550 Moissy-Cramayel (FR); FREALLE, Jean-Luc Charles Gilbert, 77550 Moissy-Cramayel (FR); REBERGA, Luc Jacques Pierre, 77550 Moissy-Cramayel (FR); RIZZO, Pascal, 77550 Moissy-Cramayel (FR)
(74) Mandataire: Regimbeau
(86) Numéro de dépôt international: PCT/FR2020/050096
(87) Numéro de publication internationale: WO 2020/152425

(56) Documents cités:
- CN-A- 107 304 716
- FR-A1- 2 995 947
- US-A- 6 131 449
- US-A1- 2012 325 348
- US-A1- 2015 007 713
- US-A1- 2017 227 424

## Description

### DOMAINE DE L'INVENTION

L'invention concerne un procédé de surveillance de l'état de fonctionnement d'un organe à géométrie variable de turbomachine.

Ce procédé est en particulier destiné à être mis en oeuvre pour des volets d'entrée d'air d'un moteur aéronef.

### ETAT DE LA TECHNIQUE

Certaines turbomachines d'aéronefs, tels que des turbomoteurs hélicoptères, sont équipées de volets d'entrée d'air, qui servent à optimiser le point de fonctionnement du moteur.

La fonction de pilotage des volets d'entrée d'air, et plus généralement des organes géométrie variable, est le plus souvent assurée par un vérin hydraulique dont les pressions de chambres dudit vérin sont modulées par un organe électrohydraulique telle qu'une servovalve. La servovalve reçoit un courant de commande du calculateur et est alimentée hydrauliquement par un circuit de carburant, dont les pompes sont entraînées par le générateur de gaz de la turbomachine.

Ces volets, pour remplir pleinement leur fonction, doivent être capables de parcourir entièrement leur plage utile, et cela avec la dynamique spécifiée. La vitesse la plus rapide spécifiée est rarement demandée, mais il est nécessaire de s'assurer qu'elle puisse être atteinte si besoin.

Il est considéré que l'augmentation de l'effort résistant de manoeuvre des volets (par encrassement par le sable par exemple) est un signe de dégradation précurseur pouvant conduire à l'incapacité de l'ensemble volet, vérin, servovalve à tenir les performances spécifiées.

De façon traditionnelle, un test manuel de maintenance est réalisé régulièrement pour vérifier l'effort résistant des volets. Ce test consiste à déconnecter la cinématique volets du vérin, puis à manoeuvrer les volets à la main sur toute leur plage utile, en s'assurant qu'il n'y a pas d'effort résistant anormal. En cas de doute, une clé dynamométrique est utilisée pour vérifier le niveau d'effort résistant. A partir d'un certain seuil, une action de maintenance est exigée (lavage compresseur, par exemple, dans un premier temps).

Une telle solution à comme inconvénient de nécessiter l'intervention d'un opérateur de maintenance à intervalles rapprochés. De plus, à la suite d'une telle intervention, il existe un risque de mal reconnecter la tige qui lie la cinématique volets au vérin. En outre, une telle intervention peut nécessiter la dépose d'un moteur pour réaliser l'opération du fait de l'impossibilité d'accès avec la clé dynamométrique.

Également, une telle solution ne teste que la résistance côté volets d'entrée d'air et pas de dégradations éventuelles du vérin, du circuit d'alimentation (par exemple le circuit carburant) et de la servovalve de commande du vérin.

On connait d'après le document US 2017/227424 un système et un procédé de surveillance d'un système d'actionnement de carburant, plus particulièrement dans le contexte des moteurs à turbine à gaz. Le système d'actionnement de carburant peut comprendre une commande électronique du moteur, une servovalve, une valve doseuse et/ou un élément de rétroaction. La valve doseuse est déplacée via une pression hydraulique issue d'un système de carburant.

On connait également d'après le document US 2012/325348 A1 un procédé de surveillance du fonctionnement d'un système de carburant.

On connait enfin d'après le document US 6131449 A, un système de commande pour tester les performances d'une commande associée aux aubes directrices d'entrée d'un moteur d'avion. Le procédé comprend les étapes consistant à introduire, dans le programme de positionnement de l'actionneur, une étape pour provoquer une perturbation dans le système pendant un intervalle de temps pour déterminer un échec/fonctionnement réussi de la commande.

Aucun de ces trois documents ne décrit, ni ne suggère l'ensemble des étapes mentionnées dans la revendication 1.

### PRESENTATION DE L'INVENTION

La présente invention vise à améliorer le fonctionnement d'organes à géométrie variable dans un turboréacteur qui sont alimentés en fluide hydraulique par prélèvement sur le circuit d'alimentation en carburant du moteur.

L'invention a ainsi pour but de proposer un procédé de surveillance de l'état de fonctionnement d'organes à géométrie variable, tels que des volets d'entrée d'air d'une turbomachine permettant de pallier les inconvénients précédemment décrits.

Le but est atteint dans le cadre de la présente invention grâce à un procédé de surveillance de l'état de fonctionnement d'un système de positionnement d'organes à géométrie variable d'une turbomachine tel que défini dans la revendication 1.

Avantageusement, le procédé de surveillance peut également comprendre au moins l'une des caractéristiques suivantes :
- l'étape de détermination d'une première position P1 des organes à géométrie variable comporte l'application d'une commande permet de piloter le vérin pour amener les organes à géométrie variable à la première position P1 ;
- les seuils de vitesse sont déterminés en fonction d'un modèle du vérin et de l'organe électrohydraulique qui permet d'établir la vitesse du vérin en fonction d'un effort résistant au déplacement dudit vérin , ceci pour des pressions du liquide hydraulique et un courant de commande, appliqués audit l'organe électrohydraulique, déterminés ;
- une position, parmi la première et la seconde position, correspond à une position des organes à géométrie variable où lesdits organes à géométrie variable sont pleinement ouverts et l'autre position parmi la première et la seconde position, correspond à une position des organes à géométrie variable où lesdits organes à géométrie variable sont pleinement fermés ;
- le liquide hydraulique est du carburant issu du circuit carburant de la turbomachine, et l'organe électrohydraulique est une servovalve du vérin hydraulique ;
- les organes à géométrie variable sont des volets d'entrée d'air.

Avantageusement, ledit procédé permet d'établir une surveillance automatique plutôt que manuelle, à laquelle il peut être procédé à chaque arrêt moteur.

Également, ledit procédé permet de tester la fonctionnalité de tout le système de commande des volets en incluant la source d'énergie, l'actionneur et son moyen de commande, en plus du mécanisme commandé.

En outre, ledit procédé permet de profiter d'une phase non-fonctionnelle du moteur (chambre éteinte) pour réaliser ce test en temps masqué.

L'invention a également pour objet un produit-programme d'ordinateur selon la revendication 7.

### DESCRIPTION DES FIGURES

D'autres buts et avantages de la présente invention apparaîtront à la lecture de la description détaillée qui va suivre, au regard des figures annexées, données à titre d'exemples non limitatifs et sur lesquelles :
- La figure 1 illustre de façon schématique un moteur à turbine à gaz selon l'état de l'art ;
- la figure 2 représente de manière schématique un procédé de surveillance de l'état de fonctionnement de volets d'entrée d'air selon l'invention ;
- la figure 3 représente une courbe d'évolution de la vitesse de volets d'entrée d'air en fonction de la résistance appliquer à son déplacement; et
- les figures 4A, 4B, 4C représentent des courbes d'évolution temporelles simultanées de, respectivement, la position de volets, le courant d'équilibre de volets, le courant de commande appliqué au vérin hydraulique, la vitesse du générateur de gaz de la turbomachine, pour la mise en oeuvre du procédé de surveillance selon l'invention.

### DESCRIPTION DETAILLEE D'AU MOINS UN MODE DE REALISATION DE L'INVENTION

Un mode de réalisation d'un procédé de surveillance de l'état de fonctionnement d'organes à géométrie variable conforme à l'invention est ci-après décrit dans le cadre d'organes à géométrie variable, tels que des volets d'entrée d'air d'un moteur d'hélicoptère à turbine à gaz. Toutefois, le domaine d'application de l'invention s'étend à des moteurs à turbine à gaz d'autres aéronefs, notamment à des avions et à des moteurs d'aéronefs autres qu'à turbine à gaz.

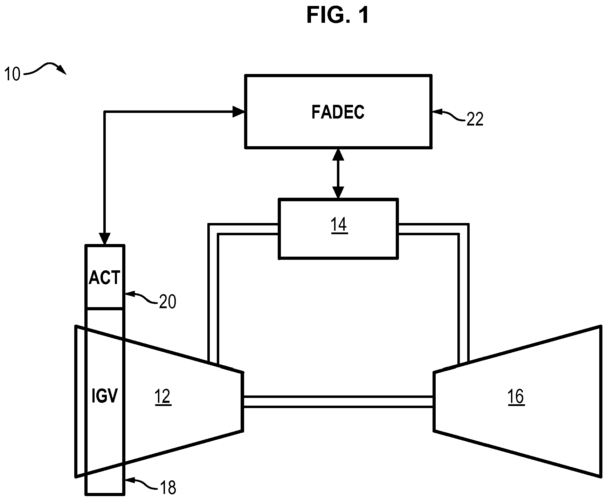

La **figure 1** illustre de façon schématique un moteur à turbine à gaz 10, comprenant classiquement un compresseur 12, une chambre de combustion 14 et une turbine 16 destinée à l'entrainement du compresseur.

### L'ensemble compresseur-chambre de combustion-turbine forme un générateur de gaz

En entrée du compresseur 12 sont disposés des volets d'entrée d'air (IGV 18) dont le positionnement en rotation est assuré par un ou plusieurs actionneurs (ACT 20) commandés depuis un calculateur central (FADEC 22) qui assure en outre la gestion du moteur.

La fonction de pilotage des volets d'entrée d'air 18 est le plus souvent assurée par un vérin hydraulique dont les pressions de chambres dudit vérin sont modulées par un organe électrohydraulique telle qu'une servovalve. La servovalve reçoit un courant de commande du calculateur et est alimentée hydrauliquement par un circuit de carburant, dont la pompe haute pression est entraînée par le générateur de gaz de la turbomachine.

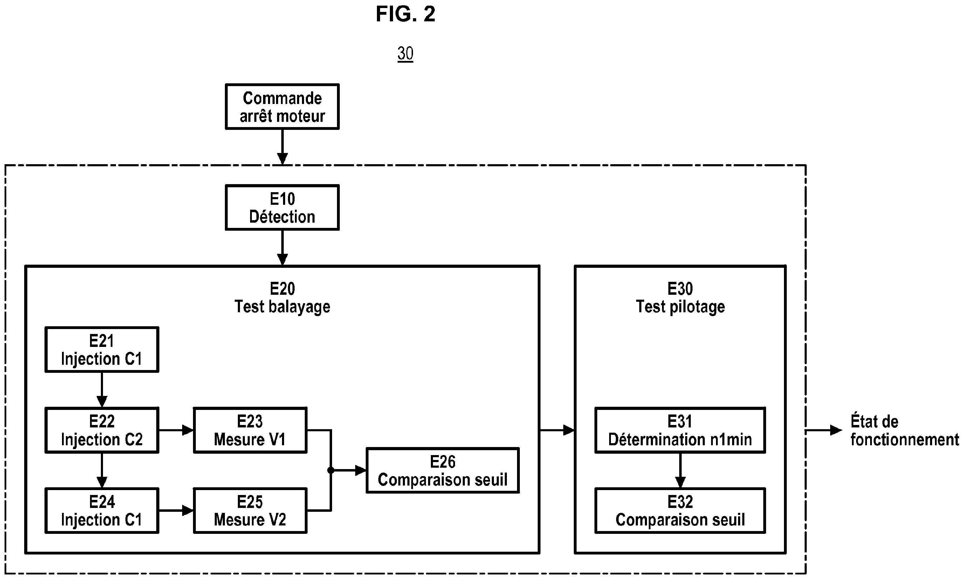

### En référence à la figure 2, il est décrit un procédé de surveillance de l'état de fonctionnement de volets d'entrée d'air mis en oeuvre par un module de surveillance 30.

Avantageusement, le module de surveillance 30 peut être mis en oeuvre par un calculateur de l'aéronef, ou comprendre des moyens de connexion audit calculateur. Un calculateur comprend, de manière connue, des moyens informatiques configurés pour traiter des données et mettre en oeuvre des programmes d'ordinateur. Le calculateur peut être, par exemple, le calculateur central (FADEC 22) qui est utilisé pour gérer des informations sur le fonctionnement du ou des moteurs de l'aéronef.

En particulier, le module de surveillance 30 peut être apte à convertir une mesure analogique de position des volets reçue en une valeur digitale utilisable, par exemple, par un processeur ou par un Field-Programmable Gate Array (FPGA).

Le module de surveillance 30 est ainsi configuré pour acquérir des mesures de position des volets, par exemple par un capteur du vérin, ainsi que de vitesse de rotation du moteur, par exemple du corps haute pression (HP) dudit moteur.

Avantageusement, les capteurs permettant l'acquisition de telles mesures sont des capteurs usuellement disponibles dans le moteur d'aéronef.

Dans une étape **E10** du procédé, le module de surveillance 30 est configuré pour détecter un arrêt du moteur. Suite à cette détection, et donc lors de la décélération du moteur, le module de surveillance procède à un test de balayage dans une étape **E20.**

Un préalable pour la réalisation de ce test est d'avoir aux bornes du vérin une pression de liquide hydraulique (tel que le carburant issu du circuit carburant) connue et constante pendant une large plage de la phase d'arrêt moteur.

Dans le contexte de la servovalve, le circuit d'alimentation hydraulique est conçu de telle manière qu'il maintient aux bornes de la servovalve de commande une différence de pression entre alimentation et retour connue et constante, lors d'une large plage de la décélération du moteur.

Un autre préalable est qu'une fois la chambre de combustion 14 éteinte, l'on puisse manoeuvrer sur une course importante les volets d'entrée d'air sans dommage pour le moteur ou ses composants.

Les volets sont testés pour surveiller le balayage d'une zone définie entre une première position P1, et une seconde position P2.

Par exemple, la première position P1 peut correspondre à une position des volets 18 où ils sont pleinement ouverts. La seconde position P2 peut correspondre à une position des volets 18 où ils sont pleinement fermés. Cette configuration de position sera envisagée dans la suite de la description.

Il est bien entendu, que les positions peuvent être inversées, i.e., la première position P1 correspondant à une pleine fermeture, et la seconde position P2 correspondant à une pleine ouverture des volets 18.

Le positionnement des volets peut être déterminé en fonction du courant de commande d'équilibre, c'est à dire le courant de commande pour obtenir une vitesse nulle de vérin. Ce courant d'équilibre est évalué à chaque instant par un programme de commande du vérin.

Ainsi, pour des pressions d'alimentation de la servovalve et un effort résistant donnés, la vitesse de vérin ne dépend que du courant commande.

Le test de balayage volets de l'étape E20 se déroule en trois sous-étapes, mises en oeuvre par le module de surveillance 30 :
- E21 : injection d'un courant de commande constant C1, déterminé d'après la valeur de courant d'équilibre, à au moins un vérin actionnant les volets 18 pour amener lesdits volets 18 à la position P1 ;
- E22 : une fois lesdits volets 18 arrivés à la position P1, injection d'un nouveau courant de commande constant C2, déterminé d'après la valeur de courant d'équilibre, permettant d'amener les volets 18 à la position P2 ;
- E23 : une mesure du temps de balayage est réalisée pour en déduire la vitesse V1 de balayage de la position P1 à la position P2.
- E24 : une fois les volets 18 arrivés à la position P2, réinjection du premier courant de commande constant C1 permettant d'amener les volets 18 à la position P1.
- E25 : une mesure du temps de balayage est réalisée pour en déduire la vitesse V2 de balayage de la position P2 à la position P1.
- E26 : les deux vitesses mesurées sont comparées à un seuil de vitesse minimale qui doit être atteinte dans ces conditions (pression carburant/courant de commande).

Également, les vitesses peuvent être calculées entre 2 points intermédiaires entre P1 et P2.

Alternativement, l'organe de modulation de l'énergie hydraulique vers un actionneur hydraulique suivant une commande n'est pas une servovalve. Le courant de commande, permettant de positionner les volets, étant remplacé, dans un exemple non couvert par les revendications, par la variable de modulation de la vitesse de l'actionneur.

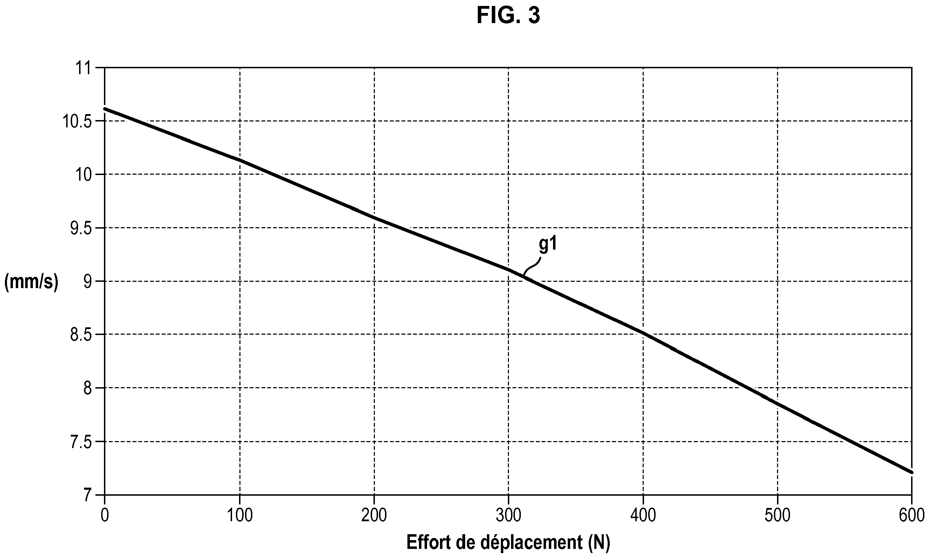

En référence à la **figure 3****,** et plus particulièrement à la courbe g1, ce seuil de vitesse minimale est issu de l'identification d'un modèle vérin qui permet d'établir la vitesse du vérin en fonction de l'effort résistant qu'on lui applique au déplacement, ceci pour des conditions données de pressions carburant et de courant de commande (déterminé d'après la valeur de courant d'équilibre).

Au-delà de la comparaison à un seuil, les temps de balayage mesurés et/ou les vitesses calculées lors de chaque arrêt peuvent être mémorisés, par exemple dans une zone mémoire du calculateur, afin de réaliser un suivi de tendance permettant de suivre l'évolution de la marge entre la motricité de l'actionneur et l'effort résistant de la géométrie variable et d'anticiper ainsi des actions de maintenance.

Successivement au test de l'étape E20, le module de surveillance 30 est configuré pour détecter un arrêt du moteur, et pour la mise en oeuvre d'un test de pilotage dans une étape **E30.**

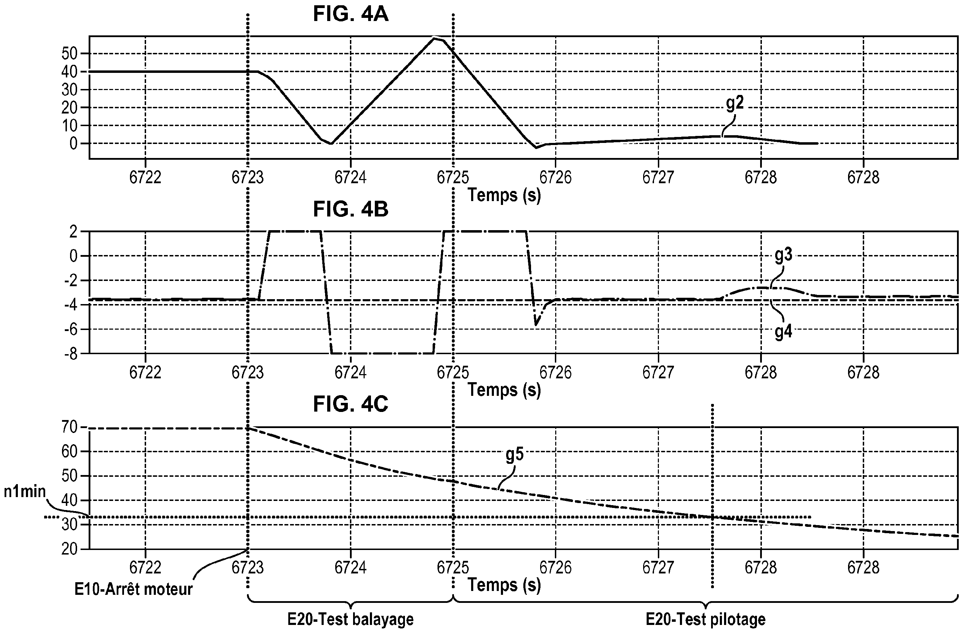

En effet, lors de la décélération moteur, à très faible vitesse de rotation du générateur de gaz, la pompe HP du circuit d'alimentation ne permet plus de maintenir la différence de pressions constante. Dans cette phase, les conditions de pressions à l'actionneur diminuent sensiblement en étant dépendantes de la vitesse de rotation et de l'état de la pompe HP. Il arrive donc un point où ces conditions sont insuffisantes pour faire bouger l'actionneur. Le but de ce test est justement de relever ce moment. Pour ce faire, à la suite du test de balayage E20, dans une étape **E31,** les volets sont à nouveau régulés sur leur consigne de position fonction de la vitesse du générateur de gaz n1 (courbe g5 - **figure 4****).**

En référence également à la figure 4, il est illustré en fonction de l'effort résistif opposé au déplacement, l'évolution temporelle de la position de volets 18 (courbe g2) simultanée à un courant de commande appliqué au vérin hydraulique actionnant lesdits volets 18 (courbe g3).

Le module de surveillance 30 applique une consigne de position volets strictement monotone en fonction du n1, en injectant au vérin un courant de commande permettant de réguler la position des volets. Idéalement, l'erreur entre la consigne de position et la position réel des volets 18 étant faible, le courant de commande est proche du courant d'équilibre des volets (courbe g4).

Le module de surveillance 30 relève jusqu'à quelle valeur minimale n1min de n1, les volets d'entrée d'air peuvent être pilotés par une loi de consigne de position vérin strictement monotone en fonction du n1.

Ladite valeur n1min correspond à la valeur n1 relevée à l'instant où les volets 18 se figent (vitesse du vérin nulle) et par conséquent où la loi de consigne n'est plus suivie, en effet comme les volets 18 ne peuvent plus suivre la loi de consigne, l'erreur entre consigne et position réelle des volets 18 augmente et donc le courant de commande s'écarte du courant d'équilibre.

Alternativement, n1min peut être déduit de la position finale des volets et de la loi de consigne de position vérin appliquée en fin de décélération moteur.

Ensuite dans une étape **E32,** cette valeur n1min est comparée à un seuil et peut faire l'objet d'un suivi de tendance permettant d'anticiper une action de maintenance.

Le procédé de surveillance proposé peut également s'appliquer à d'autres types d'organes à géométrie variable, par exemple des vannes de décharges, etc.

Les vannes de décharge permettent de décharger le compresseur, et ainsi de s'éloigner de la ligne de pompage. Elles sont généralement ouvertes à bas régimes pour dégager des capacités d'accélération puis sont fermées à plus haut régimes pour optimiser le rendement du moteur. Les vannes de décharge sont par exemple des vannes progressives.

Ces dernières sont des servo-vannes dont la position peut prendre n'importe quel point de la plage entre plein ouvert et plein fermé. Elles sont pilotées par le calculateur via un courant de commande. Les vannes progressives se commandent donc de la même manière que les volets d'entrées d'air.

## Revendications

1. Procédé de surveillance de l'état de fonctionnement d'un système de positionnement d'organes à géométrie variable (18) d'une turbomachine (10), ledit système comprenant des organes à géométrie variable (18) actionnés par au moins un vérin hydraulique (20) associé à un organe électrohydraulique piloté en courant par un calculateur (22), la puissance dudit vérin hydraulique (20) étant fonction de pressions de liquide hydraulique et du courant appliqué audit organe électrohydraulique, lesdits organes à géométrie variable (18) étant configurés pour parcourir une plage de fonctionnement comprenant une première position P1 et une seconde position P2, ledit procédé comportant, pendant une phase de décélération suite à la commande d'arrêt de la turbomachine (10),
a) un test de balayage (E20), réalisé avec des conditions de pressions de liquide hydraulique déterminées et constantes aux bornes du vérin (20), ce test de balayage (E20) comportant les étapes de :
- (E21) détermination de la première position P1 des organes à géométrie variable (18) ;
- (E22) application d'une commande C2 permettant de piloter le vérin (20) et d'amener les organes à géométrie variable à la seconde position P2, l'application de la commande C2 comportant l'injection d'un courant de commande constant, déterminé d'après la valeur de courant d'équilibre du vérin (20) ;
- (E23) mesure du temps de balayage de la première à la seconde position et détermination d'une première vitesse de balayage V1 de la première position P1 à la seconde position P2 ;
- (E24) application d'une première commande de pilotage C1 permettant d'amener les organes à géométrie variable à la première position P1, une fois les organes à géométrie variable arrivés à la seconde position P2, l'application de la commande C1 comportant l'injection d'un courant de commande constant, déterminé d'après la valeur de courant d'équilibre du vérin (20) ;
- (E25) mesure du temps de balayage de la seconde à la première position et détermination d'une seconde vitesse de balayage de la seconde position P2 à la première position P1 ; et
- (E26) détermination d'une anomalie de fonctionnement du système de positionnement des organes à géométrie variable (18) si la première vitesse V1 est inférieure à un premier seuil de vitesse déterminé et/ou si la seconde vitesse V2 est inférieure à un second seuil de vitesse déterminé,
b) puis un test de pilotage (E30) qui comporte les étapes :
- (E31) d'application d'une consigne de position des organes à géométrie variable (18) strictement monotone en fonction de la vitesse d'un générateur de gaz de la turbomachine (10) et de détermination de la vitesse minimale (n1min) du générateur de gaz pour laquelle la consigne de position est respectée ; et
- (E32) de détermination d'une anomalie de fonctionnement du système de positionnement des organes à géométrie variable (18) si la vitesse minimale (nlmin) est supérieure à une valeur seuil déterminée de vitesse du générateur de gaz.

2. Procédé de surveillance selon la revendication précédente dans lequel l'étape de détermination d'une première position P1 des organes à géométrie variable comporte l'application d'une commande permet de piloter le vérin (20) pour amener les organes à géométrie variable (18) à la première position P1.

3. Procédé de surveillance selon l'une des revendications précédentes dans lequel, les seuils de vitesse sont déterminés en fonction d'un modèle du vérin (20) et de l'organe électrohydraulique qui permet d'établir la vitesse du vérin (20) en fonction d'un effort résistant au déplacement dudit vérin (20), ceci pour des pressions du liquide hydraulique et un courant de commande, appliqués audit l'organe électrohydraulique, déterminés.

4. Procédé de surveillance selon l'une des revendications précédentes dans lequel une position, parmi la première et la seconde position, correspond à une position des organes à géométrie variable (18) où lesdits organes à géométrie variable (18) sont pleinement ouverts et l'autre position parmi la première et la seconde position, correspond à une position des organes à géométrie variable (18) où lesdits organes à géométrie variable (18) sont pleinement fermés.

5. Procédé de surveillance selon l'une des revendications précédentes dans lequel le liquide hydraulique est du carburant issu du circuit carburant de la turbomachine (10), et l'organe électrohydraulique est une servovalve du vérin hydraulique (20).

6. Procédé de surveillance selon l'une des revendications précédentes dans lequel les organes à géométrie variable sont des volets d'entrée d'air.

7. Produit programme d'ordinateur comprenant des instructions de code qui conduisent une turbomachine (10) à exécuter les étapes du procédé de surveillance de l'état de fonctionnement d'organes à géométrie variable (18) de ladite turbomachine (10) selon l'une des revendications 1 à 6, cette turbomachine (10) comprenant un calculateur (22), au moins un vérin hydraulique (20) associé à un organe électrohydraulique piloté en courant par ledit calculateur (22), ce vérin hydraulique (20) permettant de déterminer la position et d'actionner lesdits organes à géométrie variable (18), et des moyens de reconnaissance de la phase de décélération suite à la commande d'arrêt de ladite turbomachine.

## Patentansprüche

1. Verfahren zur Überwachung des Betriebszustands eines Positionierungssystems für Organe (18) mit variabler Geometrie einer Turbomaschine (10), wobei das System Organe (18) mit variabler Geometrie umfasst, die durch mindestens einen Hydraulikzylinder (20) betätigt werden, der einem elektrohydraulischen Organ zugehörig ist, das durch einen Rechner (22) stromgeregelt wird, wobei die Leistung des Hydraulikzylinders (20) abhängig von Hydraulikflüssigkeitsdrücken und vom an das elektrohydraulische Organ angelegten Strom ist, wobei die Organe (18) mit variabler Geometrie dazu ausgestaltet sind, einen Betriebsbereich zurückzulegen, der eine erste Position P1 und eine zweite Position P2 umfasst, wobei das Verfahren während einer Verlangsamungsphase im Anschluss an den Befehl zum Anhalten der Turbomaschine (10) Folgendes umfasst:
a) einen Abtasttest (E20), der mit Bedingungen von Hydraulikflüssigkeitsdrücken ausgeführt wird, die bestimmt wurden und an den Anschlüssen des Zylinders (20) konstant sind, wobei dieser Abtasttest (E20) die folgenden Schritte umfasst:
- (E21) Bestimmung der ersten Position P1 der Organe (18) mit variabler Geometrie;
- (E22) Anwendung eines Befehls C2, der das Regeln des Zylinders (20) und das Bringen der Organe mit variabler Geometrie in die zweite Position P2 erlaubt, wobei die Anwendung des Befehls C2 das Einspeisen eines konstanten Steuerstroms umfasst, der nach dem Gleichgewichtsstromwert des Zylinders (20) bestimmt wird;
- (E23) Messung der Abtastzeit von der ersten Position zur zweiten Position und Bestimmung einer ersten Abtastgeschwindigkeit V1 von der ersten Position P1 zur zweiten Position P2;
- (E24) Anwendung eines ersten Regelungsbefehls C1, der das Bringen der Organe mit variabler Geometrie in die erste Position P1 ermöglicht, nachdem die Organe mit variabler Geometrie an der zweiten Position P2 angekommen sind, wobei die Anwendung des Befehls C1 die Einspeisung eines konstanten Steuerstroms umfasst, der nach dem Gleichgewichtsstromwert des Zylinders (20) bestimmt wird,
- (E25) Messung der Abtastzeit von der zweiten Position zur ersten Position und Bestimmung einer zweiten Abtastgeschwindigkeit von der zweiten Position P2 zur ersten Position P1; und
- (E26) Bestimmung einer Anomalie des Betriebs des Positionierungssystems der Organe (18) mit variabler Geometrie, wenn die erste Geschwindigkeit V1 niedriger als ein erster bestimmter Geschwindigkeitsschwellenwert ist und/oder wenn die zweite Geschwindigkeit V2 niedriger als ein zweiter bestimmter Geschwindigkeitsschwellenwert ist,
b) dann einen Regelungstest (E30), der die folgenden Schritte umfasst:
- (E31) Anwendung eines Positionssollwerts der Organe (18) mit variabler Geometrie strikt monoton in Abhängigkeit von der Geschwindigkeit eines Gasgenerators der Turbomaschine (10) und Bestimmung der Mindestgeschwindigkeit (n1min) des Gasgenerators, für welche der Positionssollwert eingehalten wird; und
- (E32) Bestimmung einer Anomalie des Betriebs des Positionierungssystems der Organe (18) mit variabler Geometrie, wenn die Mindestgeschwindigkeit (n1min) größer als ein bestimmter Geschwindigkeitsschwellenwert des Gasgenerators ist.

2. Überwachungsverfahren nach dem vorhergehenden Anspruch, wobei der Schritt der Bestimmung einer ersten Position P1 der Organe mit variabler Geometrie die Anwendung eines Befehls umfasst, der das Regeln des Zylinders (20) erlaubt, um die Organe (18) mit variabler Geometrie in die erste Position P1 zu führen.

3. Überwachungsverfahren nach einem der vorhergehenden Ansprüche, wobei die Geschwindigkeitsschwellenwerte in Abhängigkeit von einem Modell des Zylinders (20) und des elektrohydraulischen Organs bestimmt werden, welches das Ermitteln der Geschwindigkeit des Zylinders (20) in Abhängigkeit von einer Kraft ermöglicht, die der Verlagerung des Zylinders (20) standhält, und zwar für bestimmte Drücke der Hydraulikflüssigkeit und einen bestimmten Steuerstrom, die bzw. der auf bzw. an das elektrohydraulische Organ angewandt bzw. angelegt werden bzw. wird.

4. Überwachungsverfahren nach einem der vorhergehenden Ansprüche, wobei eine Position von der ersten und der zweiten Position einer Position der Organe (18) mit variabler Geometrie entspricht, wo die Organe (18) mit variabler Geometrie vollständig offen sind, und die andere Position von der ersten und der zweiten Position einer Position der Organe (18) mit variabler Geometrie entspricht, wo die Organe (18) mit variabler Geometrie vollständig geschlossen sind.

5. Überwachungsverfahren nach einem der vorhergehenden Ansprüche, wobei die Hydraulikflüssigkeit Kraftstoff ist, der aus der Kraftstoffanlage der Turbomaschine (10) stammt, und das elektrohydraulische Organ ein Servoventil des Hydraulikzylinders (20) ist.

6. Überwachungsverfahren nach einem der vorhergehenden Ansprüche, wobei die Organe mit variabler Geometrie Lufteinlassklappen sind.

7. Computerprogrammprodukt, das Codeanweisungen umfasst, die bewirken, dass eine Turbomaschine (10) die Schritte des Verfahrens zur Überwachung des Betriebszustands von Organen (18) mit variabler Geometrie der Turbomaschine (10) nach einem der Ansprüche 1 bis 6 ausführt, wobei diese Turbomaschine (10) einen Rechner (22), mindestens einen Hydraulikzylinder (20), der einem elektrohydraulischen Organ zugehörig ist, das durch den Rechner (22) stromgeregelt wird, wobei dieser Hydraulikzylinder (20) das Bestimmen der Position und das Betätigen der Organe (18) mit variabler Geometrie ermöglicht, und Mittel zur Erkennung der Verlangsamungsphase im Anschluss an den Befehl zum Anhalten der Turbomaschine umfasst.

## Claims

1. A method for monitoring the operating state of a system for positioning variable-geometry members (18) of a turbomachine (10), said system comprising variable-geometry members (18) actuated by at least one hydraulic actuator (20) associated with an electrohydraulic member current-controlled by a computer (22), the power of said hydraulic actuator (20) depending on hydraulic liquid pressures and on the current applied to said electrohydraulic member, said variable-geometry members (18) being configured to travel over an operating range comprising a first position P1 and a second position P2, and,
said method including, during a deceleration phase following the command to stop the turbomachine (10),
a) a pivoting test (E20) realized with hydraulic liquid pressure conditions that are determined and constant at the limits of the actuator (20), this pivoting test (E20) including the steps of:
- (E21) determining the first position P1 of the variable-geometry members (18);
- (E22) applying a command C2 allowing controlling the actuator (20) and bringing the variable-geometry members to the second position P2, the application of the command C2 including the injection of a constant control current, determined according to the value of the equilibrium current of the actuator (20);
- (E23) measuring the pivoting time from the first to the second position and determining a first pivoting speed V1 from the first position P1 to the second position P2;
- (E24) applying a first control command C1 allowing bringing the variable-geometry members to the first position P1, once the variable-geometry members have arrived at the second position P2, the application of the command C1 including the injection of a constant control current, determined according to the value of the equilibrium current of the actuator (20);
- (E25) measuring the pivoting time from the second to the first position and determining a second pivoting speed from the second position P2 to the first position P1; and
- (E26) determining an anomaly in the operation of the positioning system of the variable-geometry members (18) if the first speed V1 is less than a first determined speed threshold and/or if the second speed V2 is less than a second determined speed threshold,
b) then a control test (E30) which includes the steps:
- (E31) applying a strictly monotonic position setpoint of the variable-geometry members (18) depending on the speed of a gas generator of the turbomachine (10) and determining the minimum speed (nlmin) of the gas generator for which the position setpoint is satisfied; and
- (E32) determining an anomaly in the operation of the positioning system of the variable-geometry members (18) if the minimum speed (nlmin) is greater than a determined threshold value of the speed of the gas generator.

2. The monitoring method according to the preceding claim, wherein the step of determining a first position P1 of the variable-geometry members includes the application of a command allowing controlling the actuator (20) to bring the variable-geometry members (18) to the first position P1.

3. The monitoring method according to one of the preceding claims, wherein the speed thresholds are determined depending on a model of the actuator (20) and of the electrohydraulic member which allows establishing the speed of the actuator (20) depending on a force resisting the displacement of said actuator (20), this for hydraulic liquid pressures and a control current applied to said electrohydraulic member that are determined.

4. The monitoring method according to one of the preceding claims wherein one position, of the first and the second position, corresponds to a position of the variable-geometry members (18) where said variable-geometry members (18) are fully open and the other position of the first and the second position corresponds to a position of the variable-geometry members (18) where said variable-geometry members (18) are fully closed.

5. The monitoring method according to one of the preceding claims wherein the hydraulic liquid is fuel from the fuel circuit of the turbomachine (10), and the electrohydraulic member is a servo-valve of the hydraulic actuator (20).

6. The monitoring method according to one of the preceding claims wherein the variable-geometry members are air inlet vanes.

7. A computer program product comprising code instructions for the execution by a turbomachine (10) of the steps of a method for monitoring the operating state of variable-geometry members (18) of said turbomachine (10) according to one of claims 1 to 6, this turbomachine (10) comprising a computer (22), at least one hydraulic actuator (20) associated with an electrohydraulic member current-controlled by said computer (22), this hydraulic actuator (20) allowing the determination of the position and the activation of said variable-geometry members (18), and means for recognizing the deceleration phase following the command to stop said turbomachine.
